**Europäisches Patentamt**

(19) **European Patent Office**

**Office européen des brevets**

(11) Numéro de publication: **0193446 B1**

(12) **FASCICULE DE BREVET EUROPEEN**

(45) Date de publication du fascicule du brevet:
14.09.88

(51) Int. Cl.⁴: **B 29 D 31/00**, G 03 G 15/20

(21) Numéro de dépôt: **86400277.9**

(22) Date de dépôt: **10.02.86**

(54) **Procédés de préparation et de rénovation d'un rouleau de fusion pour machine xérographique, rouleau de fusion et composition vulcanisable.**

(30) Priorité: **12.02.85 FR 8501956**

(43) Date de publication de la demande:
**03.09.86 Bulletin 86/36**

(45) Mention de la délivrance du brevet:
**14.09.88 Bulletin 88/37**

(84) Etats contractants désignés:
**AT BE CH DE FR GB IT LI LU NL SE**

(56) Documents cités:
**DE - A - 2 442 173**
**DE - A - 2 824 994**
**DE - A - 2 944 199**
**FR - A - 1 400 039**
**GB - A - 1 143 562**
**US - A - 3 999 038**

**PATENTS ABSTRACTS OF JAPAN, vol. 7, no. 165 (M-230) [1310], 20 juillet 1983, page 40 M 230; & JP - A - 58 71 147 (RICOH K.K.) 27-04-1983**
**RESEARCH DISCLOSURE, no. 217, mai 1982, pages 175-178, no. 21733, Hampshire, GB; "Fuser member"**

(73) Titulaire: **ATELIERS DE CONCEPTIONS ET D'INNOVATIONS INDUSTRIELLES, 96, boulevard de la Mission Marchand, F-92400 Courbevoie (FR)**

(72) Inventeur: **Pozzo, Michel Lucien, 32, Boulevard d'Inkerman, F-92200 Neuilly-Sur-Seine (FR)**

(74) Mandataire: **Schrimpf, Robert et al, Cabinet Regimbeau 26, Avenue Kléber, F-75116 Paris (FR)**

## Description

La présente invention concerne un procédé de préparation du revêtement extérieur d'un rouleau de fusion pour machine xérographique, applicable aussi bien à la première fabrication de ces rouleaux qu'à la rénovation des rouleaux usagés; elle concerne également les rouleaux de fusion obtenus par ce procédé, ainsi qu'une composition vulcanisable pour ce revêtement.

Les machines xérographiques comportent classiquement un poste de fusion du toner (ou poudre révélatrice), qui reçoit les feuilles de papier sur lesquelles la poudre de toner s'est déposée aux endroits exposés et soumet cette feuille à une double action de chauffage et de compression pour assurer la fusion du toner et sa pénétration dans les fibres du papier de manière à fixer définitivement l'image obtenue.

Ce poste de fusion comporte un rouleau de fusion et un rouleau de pression en contact étroit. Le rouleau de fusion est un rouleau chauffant constitué d'un noyau creux, généralement métallique, recevant des moyens de chauffage (par exemple une lampe·à quartz) et revêtu d'une mince couche anti-adhésive; le rouleau de pression est pour sa part constitué d'un noyau recouvert d'un revêtement souple, en couche relativement épaisse (par rapport au revêtement du rouleau de fusion). Il est enfin prévu un système pour appliquer sur le rouleau de fusion une très légère couche d'un agent de lubrification ou agent de dégagement, par exemple une huile silicone, pour accroître les caractéristiques anti-adhésives du rouleau de fusion et éviter ainsi tout transfert de toner du papier sur le rouleau de fusion, qui produirait un phénomène de maculage des feuilles de papier qui seraient traitées par la suite.

Un tel poste de fusion du toner est notamment décrit dans les publications FR-2 393 352 (concernant plus particulièrement le matériau du revêtement du rouleau de pression), FR-2 437 646 (concernant plus particulièrement le système de répartition de l'agent de lubrification) et FR-2 437 647 (concernant plus particulièrement les moyens de chauffage du rouleau de fusion), toutes trois au nom de Xerox Corporation.

En ce qui concerne le revêtement du rouleau de fusion, il y a lieu de choisir un matériau présentant à la fois une bonne tenue à la température (la température de surface du rouleau de fusion peut dépasser 200 °C en continu), un état de surface permettant d'atteindre les propriétés anti-adhésives souhaitées en limitant la lubrification à un minimum, et une conservation de ces propriétés malgré un usage intensif (couramment de l'ordre de plusieurs centaines de milliers de copies). En outre, l'épaisseur de ce revêtement doit être relativement faible pour ne pas créer un obstacle à la transmission de la chaleur depuis l'intérieur du rouleau jusqu'à sa surface.

Il a été proposé à cet effet d'utiliser comme revêtement des polymères fluorés tels que ceux conus sous les noms de Teflon® (qui est un polymère ou un copolymère de TFE: tétrafluoroéthylène), Viton® A (qui est un élastomère VDF/HFP: copolymère de fluorure de vinylidène et d'hexafluoropropène) ou Viton® B (qui est un élastomère FKM de type VDF/HFP/TFE: copolymère de fluorure de vinylidène, d'hexafluoropropène et de tétrafluoroéthylène). L'usage récent de ces deux derniers matériaux (mentionnés dans les publications précitées) a permis un accroissement de la qualité des copies et un allongement de la durée de vie des rouleaux, qui atteint désormais des valeurs de l'ordre de 1 million de copies.

La faible activité chimique de ces matériaux crée cependant un certain nombre de difficultés au moment de l'application du revêtement sur le noyau métallique pour assurer une adhérence convenable du revêtement à son support, sans risque de décollement après un usage prolongé: c'est pourquoi on prévoit généralement un revêtement de structure hétérogène comportant une première couche d'un élastomère adhérisant, et une seconde couche d'un polymère fluoré d'un type indiqué plus haut (Teflon® ou Viton®).

Pour un noyau en cuivre (matériau souvent utilisé en raison de son excellente conductibilité thermique), il y a lieu de prévoir également une couche d'aluminium déposée sur le cuivre et sablée pour accroître sa rugosité.

La tenue en température des revêtements utilisés jusqu'à présent est cependant limitée à des valeurs de l'ordre de 220 °C. Ceci limite la vitesse de fonctionnement du dispositif et exige des systèmes de régulation de température trés précis et fiables, à moins de prévoir, outre la source intérieure de chaleur, une source extérieure supplémentaire, comme envisagé dans le FR-2 437 647 précité.

L'un des buts de l'invention est de proposer un nouveau type de revêtement, et son procédé de fabrication, permettant d'atteindre en continu des valeurs de température très supérieures aux valeus précitées, par exemple susceptibles de supporter sans dégradation des températures de l'ordre de 260 °C en continu.

L'accroissement de la température d'utilisation en continu permet en outre une cuisson parfaite du toner même sur des papiers de fort grammage, des étiquettes adhésives, ou tout autre support épais.

Enfin, la tenue à une température élevée permet au rouleau de fusion de supporter sans dommage tout bourrage qui pourrait survenir au poste de fusion: dans les cas les plus graves, on observe en effet, au moment du bourrage, un arrêt momentané du rouleau produisant une élévation locale de température importante et par suite une dégradation du matériau du revêtement du rouleau de fusion, notamment de son état de surface; après remise en route, on constate que le toner adhère au rouleau à cet endroit, produisant un maculage permanent des copies réalisées par la suite.

Un autre but de l'invention est de proposer un revêtement procurant un allongement notable de la durée d'utilisation avant remplacement du rouleau, tout en conservant une excellente qualité finale des copies obtenues.

Un autre but de l'invention est de proposer un revêtement limitant à un minimum l'utilisation d'un agent de lubrification. Outre l'économie de produit consommable qui en résulte, la diminution de la quantité d'huile silicone utilisée permet en particulier d'écriture ou la frappe sur la copie réalisée, immédiatement à sa sortie de la machine.

Un autre but de l'invention est enfin de proposer un procédé de rénovation des rouleaux de fusion usagés, qui procure pour le rouleau rénové les mêmes caractéristiques qu'un rouleau d'origine, notamment les caractéristiques dimensionnelles concernant l'épaisseur du revêtement. Une des difficultés des opérations de rénovation des rouleaux de fusion réside en effet dans la nécessité de conserver une épaisseur de revêtement constante, indépendante du diamètre du rouleau, et d'obtenir un produit ne présentant aucune ovalisation ni irrégularité de forme ou d'état de surface.

Cette qualité homogène doit en particulier être obtenue pour des rouleaux comprenant une région centrale cylindrique et deux régions d'extrémité tronconiques divergentes (destinées à permettre une meilleure répartition sur la copie de l'agent de lubrification): malgré cette forme particulière, l'épaisseur et la qualité du revêtement doivent être identiques en tout point du rouleau.

Enfin, on verra que le revêtement réalisé selon les enseignements de l'invention est un revêtement homogène, formé d'une couche unique directement appliquée sur le noyau métallique (à la différence des rouleaux actuels, qui possèdent généralement un revêtement composite en deux couches, comme indiqué plus haut). Cette structure simplifie les opérations de fabrication ou de rénovation, et autorise une très faible épaisseur du revêtement, qui n'oppose plus qu'un obstacle minimal à la transmission de la chaleur.

A cet effet, le procédé de préparation selon l'invention comprend les étapes suivantes:

a) malaxage à froid d'un mélange comportant, pour 100 parties d'une gomme d'un élastomère fluoré, 55 à 60 parties de noir de carbone, 2 à 6 parties d'oxyde de magnésium, 4 à 8 parties d'hydroxyde de calcium et 0 à 2 parties de cire de polyéthylène,

b) mise en forme du matériau de revêtement par extrusion ou calandrage de ce mélange,

c) application de ce matériau en une couche homogène à la surface du noyau du rouleau,

d) vulcanisation à chaud et sous pression du matériau ainsi appliqué sur le noyau,

e) rectification du revêtement à une épaisseur constante.

Avantageusement, il es prévu, lors de l'étape de rectification, une passe finale de finition de surface permettant la fermeture par polissage des cellules du matériau.

On réalise ainsi la finition du revêtement à l'état de surface approprié, par exemple un état de surface permettant d'obtenir un grain satiné de la copie, avec un maximum de cuisson et un minimum de lubrification.

De préférence, après l'étape de vulcanisation, il est prévu une étape d'étuvage pour permettre le dégazage et la stabilisation du matériau vulcanisé.

De préférence également, le revêtement est rectifié à une épaisseur inférieure à 0,25 mm.

Cette faible valeur assure une excellente transmission de la chaleur du noyau métallique vers la surface du revêtement. Par ailleurs, du fait de la structure homogène du revêtement (absence de couche adhérisante entre le métal du noyau et une mince couche de surface), il devient possible de prolonger l'utilisation du rouleau, le revêtement pouvant être usé sur toute son épaisseur.

Dans le cas d'un rouleau comprenant une région centrale cylindrique et deux régions d'extrémité tronconiques divergentes, la rectification est effectuée à une épaisseur constante sur toute la surface du rouleau, et la vitesse relative de l'outil de rectification par rapport à la surface à rectifier est maintenue constante en tout point des régions tronconiques.

Par ailleurs, il est également possible de prévoir une étape finale de matage de la paroi intérieure du noyau, au cas où cette paroi serait une paroi brillante. Le matage améliore en effet l'absorption de la chaleur par la matière du rouleau en réduisant les réflexions de l'énergie thermique rayonnée par la source.

L'invention concerne également un procédé de rénovation de rouleaux de fusion pour machine xérographique, comprenant les étapes de:

mise à nu du noyau du rouleau par rectification au profil désiré,

application d'un revêtement extérieur par le procédé de préparation précité.

L'invention concerne également une composition vulcanisable pour un matériau de revêtement de rouleau de fusion pour machine xérographique, formée d'un mélange comportant, pour 100 parties d'une gomme d'un élastomère fluoré, 55 à 60 parties de noir de carbone, 2 à 6 parties d'oxyde de magnésium, 4 à 8 parties d'hydroxyde de calcium et 0 à 2 parties de cire de polyéthylène.

Les caractéristiques et avantages de l'invention seront expliqués en détail à l'aide de la description détaillée ci-dessous d'un exemple préférentiel de mise en œuvre du procédé.

A. Mise à nu du noyau

Cette étape n'est bien entendu nécessaire que dans le cas où l'on procède à la rénovation d'un rouleau existant; elle a pour but d'éliminer entièrement le revêtement existant. On procède à cet effet à une rectification du rouleau au profil désiré, c'est-à-dire en respectant la conicité dans le cas des rouleaux comportant une région centrale cylindrique et deux régions d'extrémités tronconiques divergentes.

B. Préparation de surface du noyau

Pour améliorer l'accrochage ultérieur du revêtement, on effectue un sablage doux (ou un grenaillage ou microbillage) sur la partie du rouleau devant recevoir le revêtement.

On notera à cet égard que, dans le cas des noyaux en cuivre, il n'est pas nécessaire d'effectuer un dépôt préalable d'alumine, à la différence des procédés de la technique antérieure.

Par ailleurs, le noyau peut être constitué de matériaux très variés, tels que le cuivre, le laiton, l'aluminium, l'acier inoxydable, ou même des matériaux non métalliques tels que des composites en fibres de carbone ou même en verre, selon les applications envisagées. La référence à un noyau métallique dans la description n'est en aucune façon limitative, et le matériau du noyau ne modifie pas sensiblement le procédé de l'invention.

C. Préparation de la composition vulcanisable

On malaxe dans un mélangeur à rouleaux de types conventionnels les constituants suivants de façon à obtenir une gomme homogène:

– une gomme d'un élastomère fluoré, par exemple du type Viton® A ou B déjà mentionnés plus haut (commercialisée par Du Pont de Nemours), ou Fluorel® n° 2181 ou 2177 (commercialisées par 3 M): le Viton A et le Fluorel 2181 sont des élastomères VDF/HFP (selon la nomenclature explicitée plus haut); le Viton B et le Fluorel 2177 sont des élastomères FKM de type VDF/HFP/TFE.

– noir de carbone (par exemple selon la norme ASTM n° 990) en une proportion de 55 à 60 parties pour 100 parties de gomme, de préférence environ 55 parties (ici et dans la suite, toutes les proportions sont données en poids, pour 100 parties de gomme).

– oxyde de magnésium: 2 à 6 parties, de préférence environ 3 parties,

– hydroxyde de calcium, par exemple du type VE commercialisé par Sturge): 4 à 8 parties, de préférence environ 6 parties,

– cire de polyéthylène, par exemple du type Epolene® (commercialisée par Eastman): 0 à 2 parties, de préférence environ 2 parties.

Le malaxage est effectué à température ambiante pendant une durée fonction de la quantité de matière à préparer (par exemple 20 à 40 min pour la préparation de 20 kg de mélange).

Le mélange est ensuite mis en forme par calandrage (pour obtenir des plaques de gomme), ou extrusion (pour obtenir un tube ou un boudin).

D. Vulcanisation

Cette opération, qui réalise le transfert de la gomme sur le rouleau, est réalisée par moulage à chaud et sous pression.

Selon le cas, on enroule sur le rouleau métallique une feuille de gomme préalablement découpée, on positionne le rouleau à l'intérieur d'une portion de tube extrudé de gomme, ou encore on place dans le moule un boudin de gomme fluant sous la pression et la température du moule.

De préférence, on aura préalablement appliqué sur le rouleau un agent promoteur d'adhérence, par exemple une solution d'un silance F 5150 (commercialisé par 3 M), dilué dans une proportion de 10 à 50% dans un mélange d'alcool méthylique à 85% et d'alcool isopropylique (cet exemple concerne un promoteur d'adhérence sur métal; le choix de l'agent dépend largement du matériau du noyau et du type d'élastomère employé).

La vulcanisation est réalisée à une température comprise entre 160 °C et 200 °C avec un montée en température progressive et un palier d'environ ½ h à la température maximale.

Le moule est un moule métallique chauffé à la vapeur, la pression à la surface du moule étant de l'ordre de 20 à 30 bars à la fermeture.

E. Post-vulcanisation

Cette opération a pour objet d'assurer le dégazage complet et la stabilisation définitive du revêtement du rouleau.

Elle est réalisée dans une étuve ventilée à une température maximale de 230 °C à 260 °C, avec une montée par paliers de 150 °C à 200 °C, avec une durée de 2 à 4 h par paliers. La durée du palier à température maximale est de l'ordre de 16 à 24 h.

F. Rectification finale du revêtement

Après cette opération d'étuvage, le revêtement des rouleaux présente une épaisseur brute de l'ordre de 1,5 à 2 mm. Il y a lieu de réduire cette épaisseur à des valeurs inférieures à 0,25 mm, par exemple 0,18 mm, avec une tolérance de ± 0,01 mm et ce, malgré un diamètre hors-tout du rouleau pouvant varier de ± 2 mm: en particulier, lorsqu'il s'agit d'une opération de rénovation d'un rouleau usagé, il n'est pas possible de garantir avec précision les cotes et le centrage exact du rouleau; l'épaisseur du nouveau revêtement doit en revanche être constante et précise, indépendamment du diamètre du rouleau rénové et en évitant tout faux rond.

En outre, il y a lieu de respecter la conicité aux extrémités du rouleau, le revêtement devant avoir à cet endroit la même épaisseur et le même état de surface que sur la partie centrale, cylindrique.

A cet effet, usinage est réalisé, en plusieurs passes, par une rectifieuse à commande numérique programmée en fonction du profil de rouleau désiré, tant en ce qui concerne le déplacement de l'outil (profondeur des passes successives, vitesse d'advance, respect de la conicité) que la vitesse de rectification (qui doit rester constante malgré la variation de diamètre due à la conicité; la vitesse de rotation de la machine doit donc diminuer progressivement au fur et à mesure que le diamètre augmente).

En particulier, la passe de finition – qui conditionne l'état de surface final du rouleau de fusion – nécessite un certain nombre de précautions:

choix de la meule: par exemple du type EKM 120 JOT 5-V-50 ou EKR 60/80/5 D/E 14-V-50 qui sont des meules de finition à structure ouverte commercialisées par Lapport,

diamantage préalable de celle-ci, pourt atteindre la précision souhaitée et éviter tout encrassage.

Cette passe de finition permet la fermeture des cellules du revêtement; les paramètres d'usinage peuvent varier en fonction de l'état de surface désiré, fonction des applications envisagées (grain de la copie, aspect satiné ou brillant,...).

Un contrôle final de l'épaisseur du revêtement est réalisé au moyen d'un détecteur à ultrasons, par exemple du type Panametrics S 222 (palpeur M 112) couplé à un oscilloscope Hameg HM 705.

L'examen des échos permet de certifier le résultat final en détectant tout défaut d'épaisseur du revêtement, ainsi que toute ovalisation ou faux rond du rouleau, qui auraient pu se produire lors de la vulcanisation.

Les rouleaux réalisés selon ce procédé possèdent une dureté superficielle de l'ordre de 88–92 Shore A et un état de surface excellent poli miroir, permettant d'obtenir des copies de qualité au moins égale à celle obtenue avec les rouleaux classiques, tout en réduisant la lubrification dans des proportions substantielles. Les propriétés sont conservées même avec une température de fonctionnement de 260 °C en continu (au lieu de 210 °C maximum pour les rouleaux classiques), et la durée de vie atteint 2 millions de copies (au lieu de 1 million de copies).

G. Traitement de la surface interne du rouleau

Il peut être utile de mater cette surface au cas où elle serait brillante, de manière à réduire la réflexion de chaleur vers la source radiante.

Ce matage peut être par exemple obtenu par remplissage du rouleau avec des billes (acier inoxydable, verre,...) ou des pierres de polissage, puis criblage rotatif.

**Revendications**

1. Un procédé de préparation du revêtement extérieur d'un rouleau de fusion pour machine xérographique, ce revêtement étant constitué d'une couche homogène recouvrant un noyau creux recevant des moyens de chauffage, caractérisé en ce qu'il comprend les étapes de:

a) malaxage à froid d'un mélange comportant, pour 100 parties d'une gomme d'un élastomère fluoré, 55 à 60 parties de noir de carbone, 2 à 6 parties d'oxyde de magnésium, 4 à 8 parties d'hydroxyde de calcium et 0 a 2 parties de cire de polyéthylène,

b) mise en forme du matériau de revêtement par extrusion ou calandrage de ce mélange,

c) application de ce matériau en une couche homogène à la surface du noyau du rouleau,

d) vulcanisation à chaud et sous pression du matériau ainsi appliqué sur le noyau,

e) rectification du revêtement à une épaisseur constante.

2. Un procédé selon la revendication 1, dans lequel il est prévu, lors de l'étape de rectification, une passe finale de finition de surface permettant la fermeture par polissage des cellules du matériau.

3. Un procédé selon l'une des revendications 1 et 2, comportant, après l'étape de vulcanisation, une étape d'étuvage pour permettre le dégazage et la stabilisation du matériau vulcanisé.

4. Un procédé selon l'une des revendications 1 à 3, dans lequel le revêtement est rectifié à une épaisseur inférieure à 0,25 mm.

5. Un procédé selon l'une des revendications 1 à 4, dans lequel le rouleau comprend une région centrale cylindrique et deux régions d'extrémité tronconiques divergentes, la rectification étant effectuée à une épaisseur constante sur toute la surface du rouleau et la vitesse relative de l'outil de rectification par rapport à la surface à rectifier étant maintenue constante en tout point des régions tronconiques.

6. Un procédé selon l'une des revendications 1 à 5, comportant en outre une étape finale de matage de la paroi intérieure du noyau.

7. Un procédé de rénovation de rouleaux de fusion pour machine xérographique comprenant les étapes de:

mise à nu du noyau du rouleau par rectification au profil désiré,

application d'un revêtement extérieur par le procédé selon l'une des revendications 1 à 6.

8. Une composition vulcanisable pour un matériau de revêtement du rouleau de fusion pour machine xérographique, caractérisée en ce qu'elle est formée d'un mélange comportant, pour 100 parties d'une gomme d'un élastomère fluoré, 55 à 60 parties de noir de carbone, 2 à 6 parties d'oxyde de magnésium, 4 à 8 parties d'hydroxyde de calcium et 0 à 2 parties de cire de polyéthylène.

**Patentansprüche**

1. Verfahren zur Herstellung der Aussenbeschichtung einer Heizwalze für eine xerographische Einrichtung, wobei diese Beschichtung aus einer einen Heizelemente aufnehmenden Hohlkern bedeckenden homogenen Schicht besteht, dadurch gekennzeichnet, dass es die folgenden Arbeitsschritte umfasst:

a) Kaltkneten eines Gemisches, das auf 100 Teile eines Gummis aus einem fluorierten Elastomer 55 bis 60 Teile Russ, 2 bis 6 Teile Magnesiumoxid, 4 bis 8 Teile Kalziumhydroxid und 0 bis 2 Teile Polyethylen-Wachs enthält,

b) Formen des Beschichtungsmaterials durch Extrudieren oder Kalandrieren dieses Gemisches,

c) Auftragen dieses Materials in einer homogenen Schicht auf die Oberfläche des Walzenkerns,

d) Heissvulkanisieren unter Druck des auf den Kern aufgetragenen Materials,

e) Schleifen der Beschichtung auf eine gleichmässige Dicke.

2. Verfahren nach Anspruch 1, bei dem während des Schleif-Arbeitsschrittes ein letzter Oberflächen-Schlichtarbeitsgang vorgesehen ist, der das Schliessen der Materialporen durch Polieren ermöglicht.

3. Verfahren nach einem der Ansprüche 1 und 2, umfassend, nach dem Vulkanisier-Arbeitsschritt, einen Temper-Arbeitsschritt, um die Entgasung und Stabilisierung des vulkanisierten Materials zu ermöglichen.

4. Verfahren nach einem der Ansprüche 1 bis 3, bei dem die Beschichtung auf eine Dicke unter 0,25 mm geschliffen wird,

5. Verfahren nach einem der Ansprüche 1 bis 4, bei dem die Walze einen zylindrischen Mittelabschnitt und zwei nach aussen sich vergrössernde kegelstumpfförmige Endabschnitte umfasst, wobei das Schleifen auf eine gleichmässige Dicke auf der gesamten Oberfläche der Walze durchgeführt wird und die Relativgeschwindigkeit des Werkzeuges gegenüber der zu schleifenden Fläche an jeder Stelle der kegelstumpfförmigen Abschnitte konstant gehalten wird.

6. Verfahren nach einem der Ansprüche 1 bis 5, ausserdem umfassend einen Endarbeitsschritt, in dem die Innenwand des Kerns mattiert wird.

7. Verfahren zur Reparatur von Heizwalzen für xerographische Einrichtungen, umfassend die Arbeitsschritte:

– Freilegen des Walzenkerns durch Schleifen auf das gewünschte Profil,

– Auftragen einer Aussenbeschichtung nach dem Verfahren gemäss einem der Ansprüche 1 bis 6.

8. Vulkanisierbare Masse für ein Material zum Beschichten einer Heizwalze für eine xerographische Einrichtung, dadurch gekennzeichnet, dass sie von einem Gemisch gebildet ist, das auf 100 Teile eines Gummis aus einem fluorierten Elastomer 55 bis 60 Teile Russ, 2 bis 6 Teile Magnesiumoxid, 4 bis 8 Teile Kalziumhydroxid und 0 bis 2 Teile Polyethylen-Wachs enthält.

## Claims

1. A method of preparation of the external cover of a fusion roller for a xerographic machine, said cover being constituted by a homogeneous layer covering a hellow core receiving heating means, characterized in that it comprises the stages of:

a) cold kneading a mixture having, for 100 parts of a rubber of a fluorine-containing elastomer, 55 to 60 parts of carbon black, 2 to 6 parts of magnesium oxide, 4 to 8 parts of calcium hydroxide and 0 to 2 parts of polyethylene wax,

b) forming said mixture by extrusion or calendering into a cover material,

c) application of said cover material in a homogeneous layer to the surface of said core of said roller,

d) vulcanisation at elevated temperature and under pressure of said cover material thus applied onto said core,

e) dressing of said cover to a constant thickness.

2. A method according to claim 1, in which there is provided, during said dressing stage, a final cut of the surface of said cover permitting the closing by polishing of the cells of said cover material.

3. A method according to anyone of claims 1 and 2, comprising, after the vulcanisation stage, a stoving stage for permitting the degassing and stabilisation of said vulcanised cover material.

4. A method according to anyone of claims 1–3, in which said cover is dressed to a thickness less than 0,25 mm.

5. A method according to anyone of claims 1–4, in which said roller comprises a central cylindrical region and two divergent truncoconical end regions said dressing stage being carried out to a constant thickness throughout the surface of said roller and the relative speed of the dressing tool with respect to the surface to be dressed being maintained constant at all points in said truncoconical regions.

6. A method according to anyone of claims 1–5, having in addition a final stage of matting the inside wall of the core.

7. A method of renovation of fusion rollers for a xerographic machine comprising the stages of:

stripping a core of a roller by grinding to a desired shape, and

application of an external cover by the method of anyone of claims 1–6.

8. A vulcanisable composition for a covering material for a fusion roller for a xerographic machine, characterized in that it is formed of a mixture having, for 100 parts of rubber of a fluorine-containing elastomer, 55 to 60 parts of carbon black, 2 to 6 parts of magnesium oxide, 4 to 8 parts of calcium hydroxide and 0 to 2 parts of polyethylene wax.